# EUROPEAN PATENT APPLICATION

(11) **EP 1 525 916 A1**
(43) Date of publication of application: **27.04.2005**
(21) Application number: 03024419.8
(22) Date of filing: 23.10.2003
(51) Int. Cl.: B01L 3/00, B01J 19/00

(54) **Flow triggering device**

(71) Applicant: F. Hoffmann-La Roche AG, 4070 Basel (CH); Roche Diagnostics GmbH, 68305 Mannheim (DE)
(72) Inventor: Griss, Patrick, 8004 Zürich (CH); Siljegovic, Vuk, 6440 Brunnen (CH); Kopp, Martin, 6332 Hagendorn (CH)
(74) Representative: Hörschler, Wolfram Johannes, Dipl.-Ing.

(57) **Abstract**

The invention is related to a microfluidic device through which a liquid (19) is conveyed, having at least one non-closing valve (1, 65, 73) and a channel system (10, 12, 14; 43, 44; 63, 64) within which a channel (12) branches-off from a first channel (10) connected to a liquid supply (81, 91, 101). The channel (12) branches-off from the first channel (10) prior to the at least one non-closing valve (1, 65, 73) and is connected to the outlet of the non-closing valve (1, 65, 73) channel (14) downstream of the non-closing valve (1, 65, 73). The microfluidic device (80, 90, 100) may comprise a functional chamber (40).

## Description

### Field of the Invention

The present invention is related to the control of the flow behaviour of liquid driven by capillary forces in microfluidic devices.

### Background of the Invention

WO 90/13034 discloses a capillary flow device and method. Method and devices are provided for carrying out activated partial thromboplastin time (APTT) analysis on a whole blood sample to which no anticoagulant has been added by applying the sample to a capillary track contained in a housing. Further, reagents capable of initiating an APTT-analysis are disclosed, wherein clotting time is measured by the cessation of blood flow in the capillary track. A capillary flow device comprises a housing which contains a continuous capillary pathway comprising an entry port, a first capillary unit, a reagent chamber, a second capillary unit and a venting port. Within said reagent chamber a reagent is present. The first capillary unit comprises a capillary channel from 5 to 15 mm in length, having a width in the range from 0.75 to 2 mm and a height in the range of from 0.05 to 0.125 mm. The reagent chamber comprises a capillary chamber having a length in the range of from 5 to 15 mm and a width in the range of from 3 to 8 mm and a height in the range of from 0.05 to 0.125 mm. The second capillary unit comprises a capillary channel having an initial radius in the range of from 0.05 to 0.175 mm and a final radius that provides capillary flow for a blood sample. The channel has one flat side, the remaining sides of the channel are being formed by flat surfaces or curved surfaces joined without forming angles. All curved surfaces are convex relative to said flat side, wherein at least a portion of the second capillary increases in effective diameter with increasing distance from the reagent chamber. Said reagent comprises an activator for activated partial thromboplastin time and a mixture of phospholipids in amount sufficient to initiate blood clotting. Said capillary track has a total volume in the range of from 20 to 100 µl.

The publication "Microfabricated liquid chromatography columns based on collocated monolith support structures", Journal of Pharmaceutical and Biomedical Analysis 17 (1998) pages 925 - 932, is related to microfluidic devices. The concept disclosed is that miniaturization allows large number of operations to be performed in parallel in a small space, as in electronics. Proceeding with the semiconductor analogy, it is demonstrated that in situ micromachining can be used to simultaneously fabricate millions of micrometer size, particle like structures in multiple liquid chromatography columns on a single wafer. Reduction of this widely used bioanalytical tool to the nanoliter volume, parallel processing, chip formatting is a significant step toward laboratories-on-a-chip.

WO 97/00125 is related to a flow cell for the passive mixing of flowable substances. A flow cell for the passive mixing of at least two flowable substances has an inlet opening for each substance, a common outlet opening and a planar flow bed for mixing the substances. There is provided for each substance a distributor that is arranged between the inlet opening for the substance in question and the flow bed and that divides the substance into a plurality of physically separate thin streams. The distributors supply the thin streams to the flow bed in such a manner that, in flow bed, adjacent thin streams in contact with one another contain different substances. Each distributor according to this solution comprises at least one supply channel, a distribution trough and at least two distribution channels. The supply channel extends from the associated inlet opening for the substance to the associated distribution trough and, in addition, the distribution channels each opening at one end into the distribution trough and at the other end into the flow bed. The result is that substances are able to pass from the corresponding inlet opening through the supply channels, the corresponding distribution trough and the distribution channels into the flow bed.

EP 02 077 317.2 is related to a method and device for detecting the presence of an analyte in a test sample. The method comprises to introduce a test sample in a chamber and to perform the following steps within the chamber: nucleic acids are captured which are contained in the test sample, said capturing being obtained by use of a binding surface located within said chamber. Said binding surface has a high binding affinity for capturing nucleic acids. Than a target nucleic acid sequence is amplified which is part of the captured nucleic acids. Than the presence of the amplified target nucleic acid sequence is detected.

The device comprises a chamber which has a sealable inlet port for introducing into the chamber a liquid containing test sample and a sealable outlet port allowing the exit of liquid from said chamber. The chamber contains a binding surface which is adapted to capture nucleic acids contained in the test sample and said liquid containing test sample flows through the chamber. The chamber has at least one wall which enables heating and cooling of the contents of the chamber. The temperature of said chamber is being modifiable in order to carry out therein a process for amplifying a target nucleic acid sequence which is part of the captured nucleic acids.

A part of the chamber has a zone which allows examination of the chamber contents by optical means for detecting the presence of an amplified target nucleic acid sequence contained in said chamber.

US 2002/0003001 A1 is related to surface tension valves for microfluidic applications. According to this publication a passive valve for use in a microfluidic system is disclosed. Said passive valve comprises a microfluidic first channel having a first inlet and a first outlet. Further, said passive valve comprises a second channel having a second inlet intersecting said first channel between said first inlet and said first outlet. A first region is located at the intersection of said second inlet and the said first channel which has an increased surface tension at said first region. Within said second channel, a first liquid flows having a liquid diving force which cannot overcome the surface tension at said first region and thereby holding flow within said second channel. A second liquid flows within said first channel and contacts said intersection, such that said second liquid contacts said stopped liquid at said first region and allows said first liquid to overcome the surface tension at said first region causing the first and second liquids to flow within said first channel to said outlet. The first region is provided with either a hydrophobic or a hydrophilic coating. In the alternative, said first channel can be made from a hydrophobic material, or as said second channel can be made from hydrophobic material.

From the publication "A liquid-triggered liquid microvalve", Transducers 2003, The 12^{th} International Conference on Solid State Sensors, Actuators and Microsystems, Boston, June 8-12, 2003, pages 1562 - 1565, from Jessica Melin, Niclas Roxhed, Guillem Gimenez, Patrick Griss, Wouter van der Vijngaart and Göran Stemme, a surface tension and geometry based liquid-triggered liquid microvalve is disclosed. The simultaneous presence of two liquid plugs from different liquid reservoirs at the valve junction triggers the further movement of the liquids and overcomes the stop valve function of the device. The basis microvalve consists of a Y-junction with two different reservoirs of different liquids connectred to two inlet ports and one outlet port as can be derived from figure 2 of this publication. The junction acts as a geometrical stop-valve when liquid from either port 1 or port 2 reaches this point i.e. the junction. Liquid from one inlet port reaching the junction, either by capillary forces or externally driven, waits for liquid from the other inlet port to reach the junction before moving through the outlet, i.e. the movement of the first liquid is triggered by the presence of the second liquid at the junction.

### Summary of the Invention

One object of the present invention is to considerably slow down or even stop volume flow in a microfluidic chamber or channel. Thus, fluid control enables control of chemical or physical processes for example dissolution of dried reagents in said chamber and/or the control of reaction time.

A further object of the present invention is to reliably join a liquid from a multitude of channels with a common inlet port in a bubble-free manner.

According to the present invention a solution as disclosed controls liquid flow in a passive fluidic device having no external actuation or control element. The solution according to the present invention slows down or accelerates liquid flow in the fluidic device according to the present invention. To that end the microfluidic device having at least one non-closing valve and a channel system, within which a channel branches-off from a first channel, which may define a functional chamber and being connected to a fluidic supply, comprises a trigger channel which branches-off from the first channel prior to the non-closing valve and is connected to the outlet of the non-closing valve. By the design of the trigger channel, i.e. its respective length, its number of windings and its flow resistance, said trigger channel can be adapted to specific needs and requirements of the microfluidic device. The length of the trigger channel has a strong impact on the residence time of the liquid within the functional chamber. The longer the distance, through which the liquid to be conveyed has to move until it reaches a valve, such as a geometric or passive valve, known as non-closing valve, the longer is the residence time achievable. By means of the present invention the control of the flow behaviour of liquid driven by capillary forces can be controlled. According to the present solution it is possible either to considerably slowdown or even stop liquid flow in a functional chamber to increase the residence time of liquid molecules in said chamber, for example to improve the dissolution of dried reagents within the chamber. Further, a bubble-free reliable joining of liquid from a multitude of channels into one channel is achieved. Besides the dissolution of a dried reagent, being contained within a functional chamber, to give an example, the microfluidic device according to the present invention can be used to control chemical reactions of liquids, to enhance incubation time to mix substances by way of liquid flow control or other specific purposes.

The trigger channel, which controls liquid flow through a network of microchannels contained within a substrate of a microfluidic device or microfluidic network may have a width or a diameter, which is substantially lower as compared to an inlet channel. The length of the respective trigger channel exceeds a length from an outlet of a functional chamber to a geometric valve, to allow for a time delay after which a liquid flow is triggered, i.e. when the liquid-menisci join at the outlet of a non-closing valve.

The microfluidic device according to the present invention comprises a functional chamber which is provided for dissolution of dried reagent within the liquid. By means of the design of the trigger channel which is passed by a portion of the liquid flow, the mixing of the liquid being processed with substances such as dried reagent in the functional chamber can be significantly improved by extending the residence time of the liquid within the functional chamber. In one embodiment of the present invention the respective trigger channel branches-off from an outlet channel of said functional chamber. The outlet of the functional chamber may be arranged as a pillar-array; in a further embodiment of the present invention the respective trigger channel may branch-off from an inlet channel to the respective functional chamber and is fed downstream of a functional chamber. Thus, in the latter embodiments, non-dissolved or non-processed liquid is used as medium within the branched-off trigger channel instead of processed liquid, within which the tried reagent contained within the functional chamber already have been dissolved.

The trigger channel as disclosed may be used as a trigger channel within a flow splitter device having an array of splitted channels to one of which a trigger channel is assigned. In this flow-splitter device, the openings of each of the microchannels of the array of splitted channel may contain a geometric or passive valve. Said splitted channels may be arranged on both sides of a plane planar substrates overlapping each other, thus forming said geometric passive valves.

Microfluidic devices or microfluidic networks may be etched or replicated, for example by replication by means of plastic injection, hot embossing ceramic replication. One means of replication may be a CD-replication. According to the present invention said portions of the disk may each comprise a functional chamber, to which a respective trigger channel is assigned, to control liquid flow from a reservoir to a containing element. In the alternative, a cascade arrangement of said microfluidic structures may be comprised on said portions, controlling liquid flow from a liquid storage by the length of a respective trigger channel. Depending on the design of the cascade arrangement a number of microfluidic devices may be arranged on said portions of the CD.

### Brief Description of the Drawings

Preferred embodiments of the device and method according to the present invention are described hereinafter as examples referenced to the accompanying figures.
- Figs. 1, 2: show two embodiments of passive geometric valves,
- Fig. 3: shows an inlet and the trigger channel arranged in communication with each other,
- Fig. 4: shows a meniscus preventing for the flow through the inlet channel according to Fig. 3,
- Fig. 5: shows an amount of liquid being stored in the trigger channel,
- Fig. 6: shows the liquid volumes in trigger and inlet channel joining each other forming a common meniscus towards the outlet channel,
- Fig. 7: shows an outlet flow of liquid through an outlet channel,
- Fig. 8: shows a further alternative embodiment of an inlet and a trigger channel arrangement,
- Figs. 9-12: show schematic embodiments for combining a trigger element with a further functional chamber,
- Fig. 13: shows a planar design of flow-splitter device,
- Fig. 14: shows a flow-splitter device within which geometric stop valves are generated,
- Figs. 15-17: show fluidic trigger structures to be replicated in plastic for fluidic evaluation,
- Fig. 18: shows schematically a non-closing valve and

### Description of preferred Embodiments

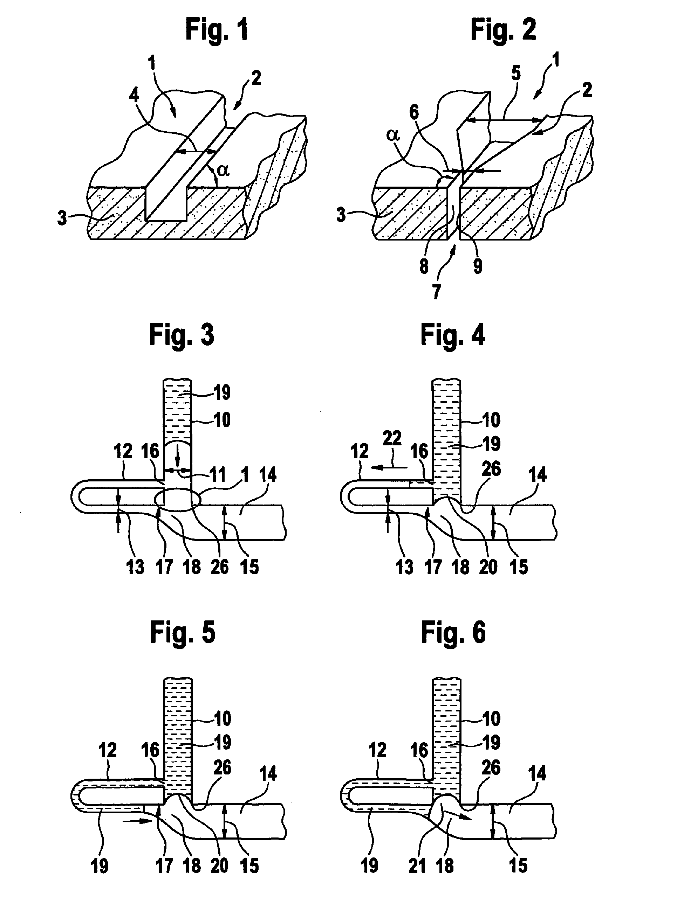

Figs. 1 and 2 show two embodiments of passive geometric valves which constitute functional elements in the context of the present invention and are known per se. In the microfluidic devices, further described herein after, a transport of a liquid 19 is established by capillary forces without application of external energy, created by a pumping element or the like. The transfer of liquid 19 within the microfluidic devices further described below is established by capillary forces. The system liquid 19/surface of channels within which the liquid 19 is conveyed, has a contact angle of less than 90°. It is understood, that the respective contact angle as described before can vary according to the type of liquid 19 which is conveyed. Within the system of liquid 19/surface of channels the contact angle can be changed by changing the surface properties of the respective channels, being formed on the front side, or the backside or on both sides of a substrate 3. Materials for the respective substrates are - to give examples - very thin machined steel foils, having a thickness within the range from about 25 µm to 1000 µm. Further, polymeric materials, having a thickness within the range 10 µm to 1000 µm can be used such as polyimide-foils or liquid crystal polymer foils (LCP) can be used. Further materials to be used as substrates are glass and pyrex® within a thickness range between 100 µm and 1000 µm. It is envisagable to use silicon-substrates the thickness of which is within a range from 25 µm and 2000 µm and materials, plane surfaces of which are etchable.

The examples according to figures 1 and 2, respectively are show known non-closing valves 1. In a substrate 3 a channel 2 is provided forming a non-closing valve 1. The width 4 of channel 2 in the substrate 3 is constant. In the example given in Fig. 1 the channel 2 has a substantially rectangular shape being a U-profile. The open side of the channel 2 on top of the substrate 3 may be covered by a further substrate which is not shown here. Instead of U-profiled channels 2 according to the embodiment given in Fig. 1 the channels 2 may be shaped as tubes with a continuously closed circumference.

A further example of a channel 2 having a non-constant width is given in Fig. 2. The channel 2 according to Fig. 2 has a first width 5 and a second width 6 within the area of a gap 7. A first surface 8 and a second surface 9 of adjacently arranged substrate 3 limit the gap 7. The gap 7 having a second width 6 constitutes a non-closing valve element 1 such as a geometric valve.

Fig. 3 shows an inlet and a trigger channel of a microfluidic device arranged in liquid communication with each other. An inlet channel 10 which either can have the shape of a tube or of a rectangular formed channel such as given in Fig. 1, conveys a liquid 19. The width or in the alternative the diameter of the inlet channel 10 is depicted by references numeral 11. In a branch-off location 16, a trigger channel 12 branches off from the inlet channel 10. The liquid 19 contained within the inlet channel 10 is propelled by means of capillary forces. Seen in flow direction of the liquid 19, a non-closing valve 1 such as a geometric valve is provided. In this context a non-closing valve 1 refers to valves in which a liquid 19 is stopped at a specific location of a channel even if the channel at the valve position is opened and is not obstructed by physical means. Geometric valves are non-closing valves, in which the valve function is obtained by a specific curvature or geometry of the channel, whereby the surface characteristics is constant with respect to a channel. Reference numeral 17 depicts the area where the trigger channel 12 and the non-closing valve 1 meet, i.e. constituing a joining location.

At the branch-off location 16 the trigger channel 12 branches off. The trigger channel 12 has a diameter or a width, respectively, labelled with reference numeral 13. The diameter or the width 13 of the trigger channel 12 is substantially lower as compared to the diameter or the width 11 of the inlet channel 10. The length of said trigger channel 12 between the branch-off location 16 and the joining location 17 is substantially higher than the distance within the inlet channel 10 from the branch-off location 16 to the end of the geometric valve 1, i.e. an edge 26 of support element 3.

Fig. 4 shows a meniscus formed, preventing further flow through the inlet channel according to Fig. 3.

Due to the action of the non-closing valve 1, such as geometric valve the liquid 19 flowing in the inlet channel 10 is stopped. Due to capillary forces, which depend on the width or the diameter 13, respectively, of the trigger channel 12, some amount of liquid 19 is drawn into the trigger channel 12. The liquid flow between branch off location 16 and joining location 17 is stopped within channel 10 at the first meniscus 20. However liquid enters slowly into a trigger channel 12. A first meniscus 20 is formed in the region of the non-closing valve 1, such as a geometric valve. In this stage, no liquid 19 is present in the joining location 17 of the outlet channel 14.

Fig. 5 shows an amount of liquid flowing in the length of the trigger channel.

Due to the restricted width or diameter 13 of the trigger channel 12 the liquid 19 needs some time to flow towards the joining location 17 of the trigger channel 12 opening into the funnel-shaped area 18. The first meniscus 20 at the bottom of inlet channel 10 is still prevailing, the fluid flow between branch off location 16 and joining location 17 is stopped, however liquid slowly enters into trigger channel 12. The liquid 19 stored within the trigger channel 12 has not reached the joining location 17 yet. As long as liquid 19 is present within the trigger channel 12, the main flow of liquid 19 within the inlet channel 10 before the branch-off location 16 is slowed down, when compared to the situation given according to figure 3. The flow of liquid 19 within the inlet channel is dependent on the cross section 13 of the trigger channel 12. The narrower channel 12 is as compared to the channel 10, the slower the fluid flows.

Fig. 6 shows the liquid volumes in the trigger channel and the inlet channel joining each other forming a common meniscus towards the outlet channel.

In the stage given in Fig. 6, the liquid 19 stored within the trigger channel 12 has reached the joining location 17. Once the liquid 19 flows out of the trigger channel 12, a second, common meniscus 21 is formed. The liquid 19 consequently is pulled towards the outlet channel 14, having a width or diameter 15, respectively, which may correspond to the cross sections 11, 13 of the inlet channel 10 and the trigger channel 12, respectively. The two flows through the inlet channel 10 and the trigger channel 12 join each other and are drawn due to capillary forces into the outlet channel 14.

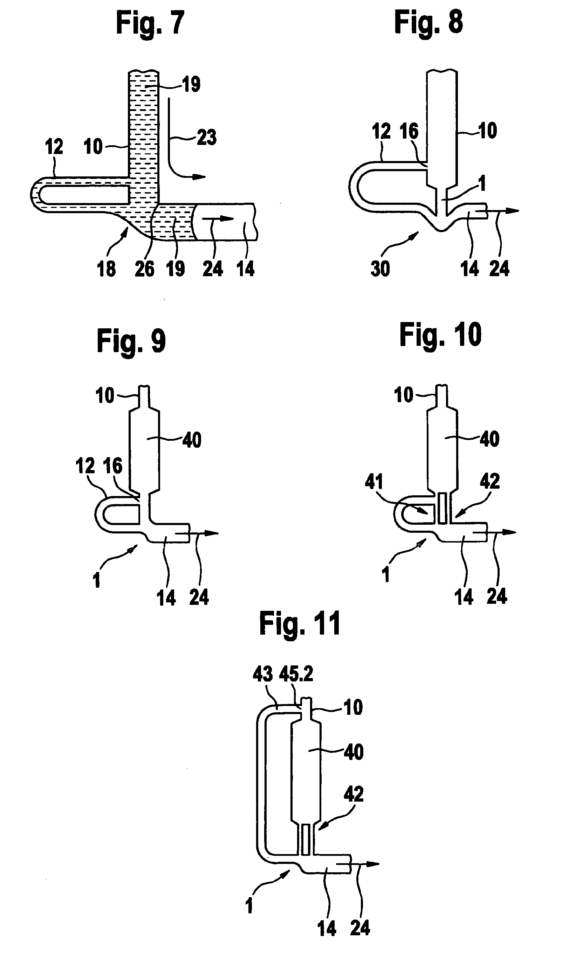

Fig. 7 shows an outlet flow of liquid through the outlet channel.

Once the flow through the trigger channel 12 has reached the joining location 17, opening into outlet channel 14 a main flow 23 or liquid 19 is generated having a flow direction as indicated by reference numeral 24. In the stage according to Fig. 7 the flow through inlet channel 10 has restarted again, whereas a partial volume of liquid 19 still flows within the trigger channel 12. In this stage the non-closing valve 1 at the bottom edge 26 of the inlet channel 10 is no longer active. If the flow resistance in the trigger channel 12 is chosen to be high, the portion of liquid flowing in the trigger channel is very low.

By controlling a flow rate of a liquid 19 in a microfluidic device with no external actuation or control elements the liquid flow can be slowed down considerably or even be stopped, thus increasing the residence time of liquid molecules for instance in a processing or functional chamber to improve the dissolution of dried reagents contained in the chamber. Another significant advantage of the trigger channel 12 is a reliable joining of liquids from a multitude of channels, having a common inlet port, such as split inlet channels into one, common outlet channel as will be described in more detail below.

Fig. 8 shows a further alternative embodiment of an inlet channel and a trigger channel arrangement. In the alternative embodiment given in Fig. 8 the inlet channel 10 and the outlet channel 14 are connected to one another by means of a non-closing valve 1 which engages the outlet channel 14 in an arc-shaped recess portion 30 thereof. In the embodiment according to figure 8, the angle α between the non-closing valve 1 and the end of the trigger channel 12 is about 45°, whereas said angle α according to the embodiments given in figures 1 and 2, respectively is about 90°. The angle α between in the joining area of the trigger channel 12 and the non-closing valve 1 can be chosen depending on the properties of the system surface/liquid and other specific requirements, for example the size and the material of the substrate 3 or the like. The material of the substantially plane substrate 3 may be chosen from one of the below listed materials: The respective inlet channels 10, outlet channels 14 and the trigger channel 12 may be manufactured in silicon substrates by etching or plastic replication.

Figs. 9-12 show schematic embodiments of a microfluidic device provided with a functional chamber.

A functional chamber 40 may allow functions such as for dissolving dried reagents. To dissolve the dried reagents within the functional chamber 40 an increase of the residence time of the liquid molecules of the liquid 19 is advantageous. The functional chamber 40 further may serve the purpose to allow for chemical reactions, dissolving dry reagents, or for mixing up substances. A further function to be performed in the functional chamber 40 is the incubation, i.e. to lengthen the residence time of liquid. Depending on the system liquid 19/dried reagents the time interval within which said dried reagents are dissolved, may vary considerably. Thus, it is important to adapt the respective residence time of the mixture liquid 19 and dried reagents depending on the dissolving time of each system liquid 19/dried reagents. This is possible by varying the length of the trigger channel 12.

The trigger channel 12, as described in connection with the embodiments according to Figs. 3-8 in greater detail above, allows a functional chamber 40 to be filled with a liquid 19. Once the liquid 19 reaches the non-closing valve 1, the flow rate into the functional chamber 40 is considerably lowered to allow for more time for specific functions to take place in the functional chamber 40 as mentioned above. The functional chamber 40 may be constituted as a simple liquid container or may contain an array of pillars or even may contain a number of liquid channels. It is further conceivable to form the first channel which is connected to a fluid supply as a functional chamber.

In the embodiment according to Fig. 9 by means of the inlet channel 10 the functional chamber 40 may be filled with a liquid 19. To the outlet of said functional chamber 40 according to the embodiment given in Fig. 9 a trigger channel 12 is assigned. The outlet of the functional chamber 40 constitutes the inlet with respect to the non-closing valve element 1 which is arranged below the functional chamber 40. At a branch-off location 16 the trigger channel 12 branches-off from the outlet of the functional chamber 40. The trigger channel 12 joins the outlet channel 14 at a joining location below the geometric valve 1 given in greater detail in Figs. 3-7. Fig. 10 shows an embodiment of a functional chamber 40, the outlet of which is arranged as a plurality 42 of parallel channels each having a non-closing valve. A pillar-array may be integrated within the functional chamber 40.

The trigger channel 12 branches-off joining the outlet channel 14 at the joining location 27 (see embodiments according to Figs. 3-7). Depending on the cross section 13 and the length of the trigger channel 12, the residence time of liquid 19 within the functional chamber 40 can be increased, e.g. to allow for performance of chemical reactions within the functional chamber 40, or in the alternative to allow for dissolving of dried reagents within the functional chamber 40 of the microfluidic device according to the present invention.

Fig. 11 shows a different embodiment of a microfluidic device, comprising a functional chamber 40. According to this embodiment, an elongated trigger channel 43 circumvents the functional chamber 40. The first circumventing trigger channel 43 branches-off at a second branch-off location 45 prior to the entry of the inlet channel 10 into a functional chamber 40. The first circumventing trigger channel 43 joins the outlet channel 14 below an arrangement of parallel channels 42 having a non-closing valve element below the functional chamber 40. The first circumventing trigger channel 43 branching-off at the respective second branch-off location 45 allows for a branching-off of liquid, prior to the entry thereof into the functional chamber 40. The liquid 19 contained within the first circumventing trigger channel 43 does not contain any functionalized liquid of functional chamber 40, but rather is pure liquid 19. Consequently, the amount of liquid contained within the functional chamber 40 can be fully used without having any portion thereof to be branched-off into the respective trigger channel 12 as in the embodiments given in figures 9, 10, respectively.

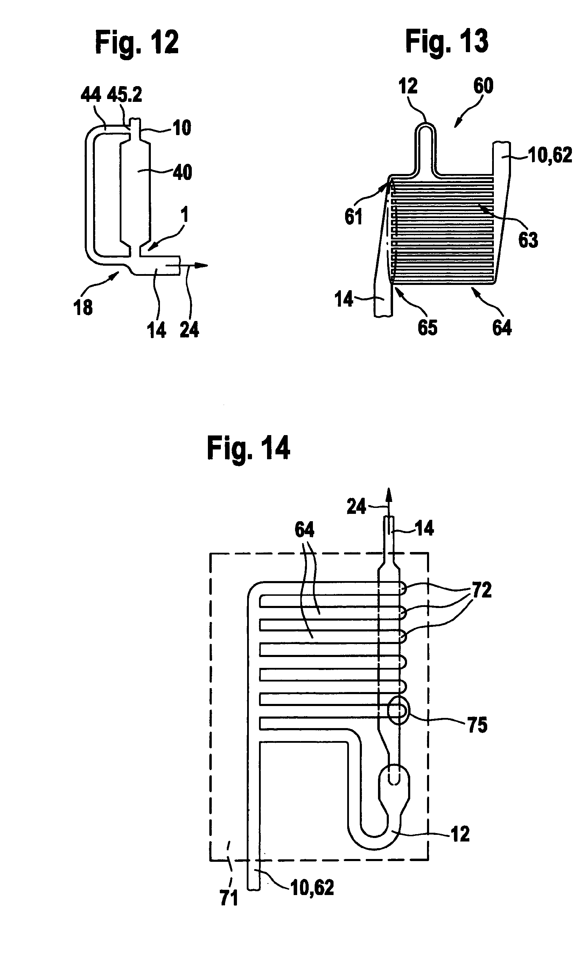

Fig. 12 shows a further embodiment of a functional chamber integrated into a microfluidic device according to the present invention.

In the embodiment according to Fig. 12 a second circumventing trigger channel 44 branches-off at second branch-off location 45 arranged above the entry of inlet channel 10 into the functional chamber 40. The second circumventing trigger channel 44 joins the outlet channel 14 within a area 18. Within the outlet channel of the functional chamber 40 according to the embodiment of Fig. 12 a non-closing valve such as geometric valve is integrated. Reference numeral 24 depicts the flow direction of the main flow from the functional chamber 40, once the second circumventing trigger channel 44 is entirely filled with the liquid 19.

Fig. 13 shows a planar design of a flow-splitter device according to the present invention. Reagents are often deposited in microfluidic channels as described above and are dissolved with a liquid 19. The speed of the dissolving procedure is limited by the diffusion of the involved molecules. Generally, in microfluidic systems there is no turbulent flow, i.e. the intermixing of molecules is process limited mainly by diffusion. A further aspect is the solubility of the product of reagent and the solvent. With the flow-splitter devices according to the present invention the surface to volume ratio of a flow-splitter device, embodied as a microfluidic device can be significantly increased. With the embodiments of a flow-splitter device described in more detail below, an inlet channel generally is split into several channels which increases the surface to volume ratio. The solution according to the present invention offers the advantage to join the liquid 19 flowing in these splitted channels in one single outlet channel again in a controlled manner without introducing or producing bubbles within the outlet flow. Additionally, it slows down the liquid flow in the splitted channels.

The embodiment according to Fig. 13 shows a planar design which may by replicated in plastics as shown in greater detail. A first flow-splitter device is identified by reference numeral 60 and comprises an inlet channel 10, 62, respectively. The planar design according to Fig. 13 includes an array 64 of splitted channels 63. The splitted channels 63 extend substantially in parallel to one another. The first flow-splitter device 60 comprises the trigger channel 12. Each of the splitted channels 63 opens into a common outlet channel 14. The openings of each of the splitted channels 63 constitute a geometric valve 65. The trigger point of the array 64 of splitted channels 63 is identified with reference numeral 61. Once the liquid 19 entering said first flows splitter device 60 and has entered into the trigger channel 12 and the respective splitted channels 63 the liquid in the respective splitted channels 63 stops at a non-closing valve 65 one of which is arranged at each end of the respective splitted channels 63. When liquid flow to trigger channel 12 reaches the trigger point 61, liquid flow begins in a sequential manner beginning in the splitted channel 63 which is arranged closest to the respective trigger point 61. The liquid 19 flowing - according to the embodiment given in figure 13 - in vertical direction downwards, fills said common outlet channel 14, the cross-section of which gradually increases in liquid flow direction out of said first flow splitter devices 60.

Fig. 14 shows a further embodiment of a flow-splitter device within which geometric stop valves are generated by means of overlapping.

The embodiment of a flow-splitter device according to Fig. 14 shows a common inlet channel 10, 62 respectively, which is split up into a plurality of splitted channels 63, forming a splitted channel array 64. The splitted channels 63 substantially extend in parallel to on another. The flow-splitter device according to Fig. 14 is in general a planar design which may be etched into a substrate 3 such as a very thin steel foil. In the embodiment according to Fig. 14 the substrate 3 such as a steel foil is etched on both sides thereof. Thus, the splitted channels 63 on one side of the foil 71 overlap etched channels on the rear-side edged on the foil 71 according to Fig. 14, thus forming overlapping regions 72 at the end of each splitted channel 63. In the overlapping region 72 which is arranged at the respective joining locations into a common outlet channel 14, geometric valves 73 are established. The array 64 of splitted channels 63 is connected to the common outlet channel 14 on the backside of the foil 71 by means of an opening connecting the trigger channel 12 arranged on the front side of the foil 71 with the common outlet channel 14 arranged on the respective other side of the foil 71. With this embodiment of a flow splitter device a change of planes can be achieved. Said single splitted channels 63 each comprise an end portion which is formed as a geometric valve 73.

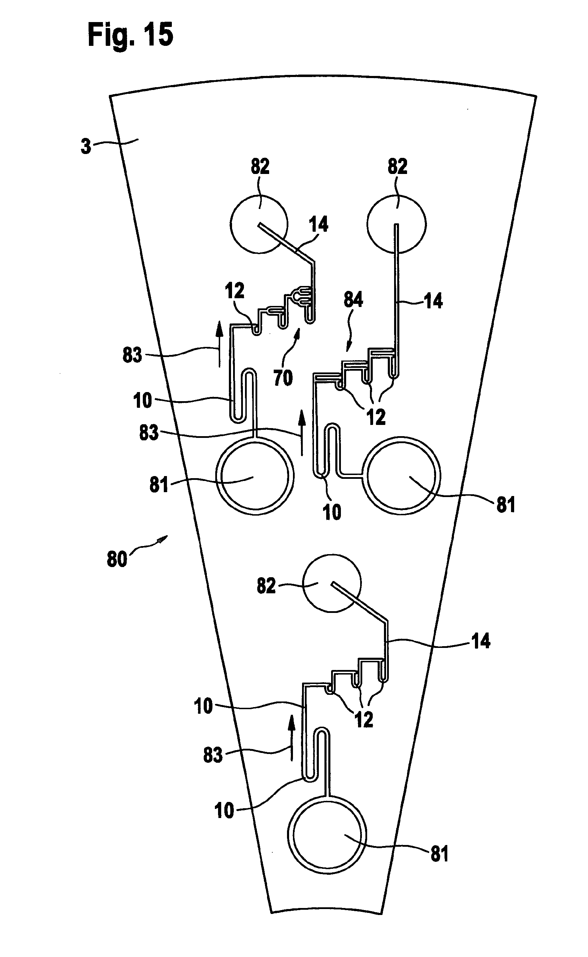

Fig. 15-17 show fluidic trigger structures to be replicated in plastics for fluidic evaluation.

Fig. 15 shows a support-structure 3 such as an injection moulded or hot embossed substrate of the like. On the top-side of the support-structure 3 according to Fig. 15 three different microfluidic systems are arranged.

On the support-structure section 3 showing in Fig. 15 the different microfluidic systems for evaluation of liquid 19 are arranged. Each of the three systems comprises a liquid supply 81 and a liquid reservoir 82, respectively. Liquid 15 is fed from the liquid supply 10 in flow direction 83 via the inlet channel 10 to a flow splitter device 60, 70, respectively, which according to Fig. 15 is shaped in a cascade arrangement 84. To each of the stages of the cascade arrangement 84 an individual trigger-channel 12 is signed to allow for bubble free flow via outlet channel 14 into the liquid reservoir 42. The branches, comprised in the cascade arrangement 84 according to Fig. 15 may vary between 2 and 4 each being triggered by a trigger channel 12 arranged to the respective cascade.

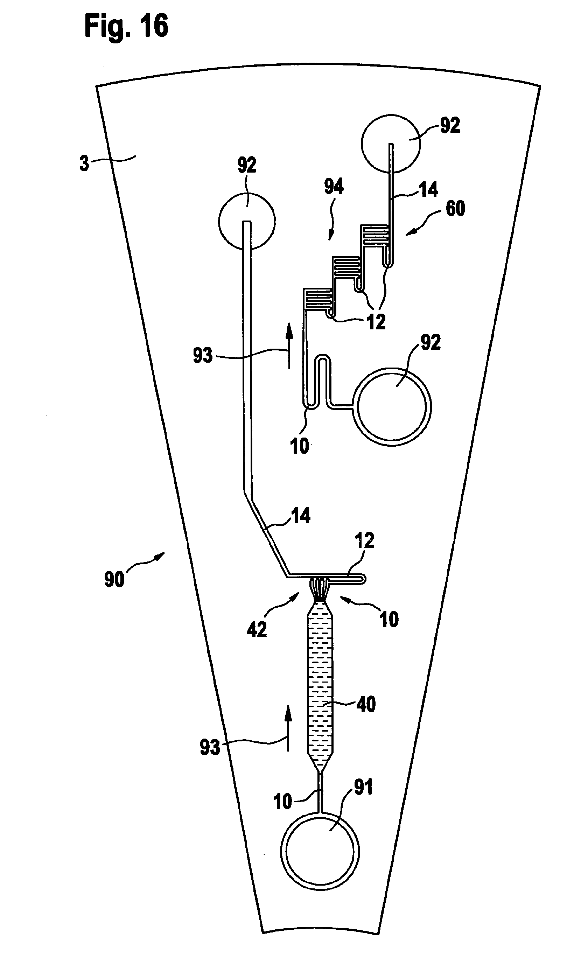

Fig. 16 shows a second liquid trigger structure according to the present invention arranged on a support-structure element 3.

The support-structure element 3 may be as previously mentioned a plastic material into which the microfluidic devices according to Fig. 16 may be replicated.

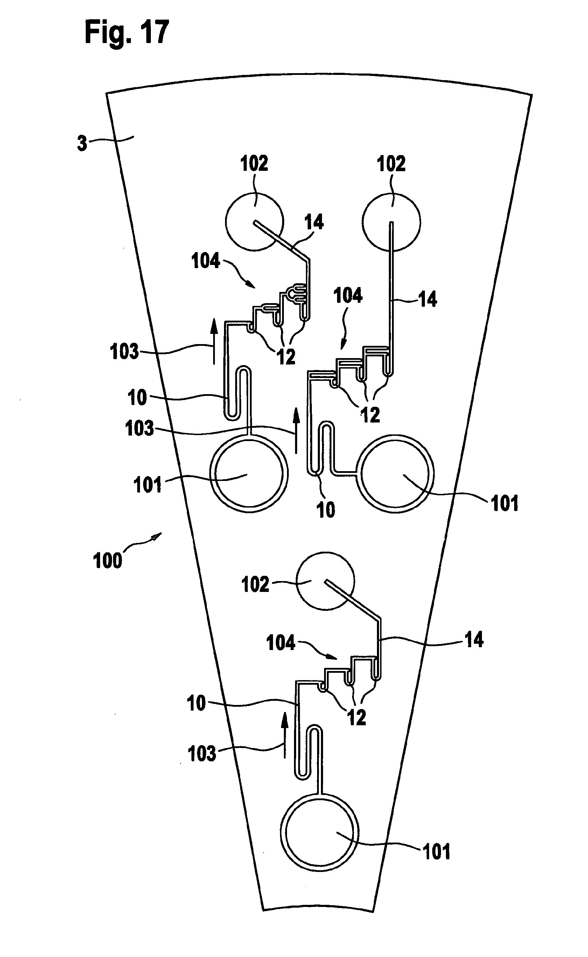

In contrast to the first fluidic trigger structure 80 according to Fig. 15, the second fluidic trigger structure 90 according to Fig. 16 comprises two microfluidic systems. One of the microfluidic systems given on the support-structure element 3 according to Fig. 16 comprises a functional chamber 40, which is fed by an inlet channel 10 from a liquid supply 91. The flow direction of the liquid is indicated by arrow 93. A portion of the liquid contained in the functional chamber 40 enters into the trigger channel 12 assigned to a series of four outlet channels (array 42) of the functional chamber each of said outlet channels having a non-closing valve. The outlet of the functional chamber 40 constitutes the inlet with respect to the trigger channel 12. The length and the cross section of the trigger channel 12 assigned to the functional chamber 40 determines the residence time of the liquid 19 contained in the functional chamber 40. Further, in the embodiment of a second fluidic trigger structure 90 according to Fig. 16 a flow-split device 60 is integrated. From the liquid supply 92 liquid is fed in flow direction 93 via inlet channel 10 to a cascade arrangement to a first flow-splitter device 60 having a cascade arrangement 94. Each of the cascades comprises four microchannels in parallel to one of which a trigger channel 12 is signed to allow for bubble-free conveying of liquid to the reservoir 92. It should be understood, that each outlet of a previous cascade 84, 94, 104, constitutes the inlet for the following cascade of the cascade arrangement 94 of the first flow-splitter device 60 according to the embodiments given in Figs. 16, 17 respectively.

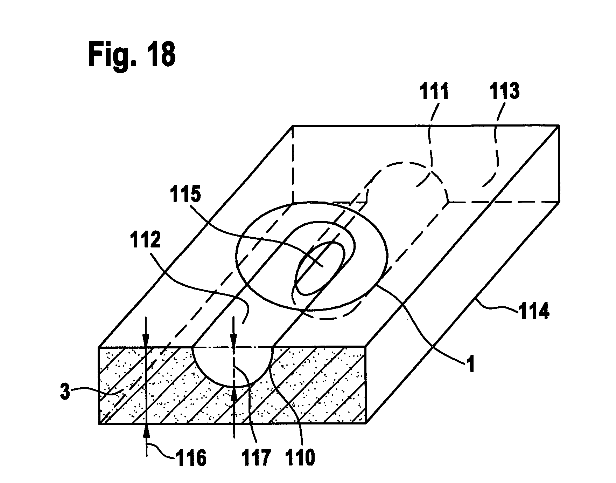

Fig. 18 shows schematically a non-closing valve as previously mentioned on page 13. According to the embodiment of a non-closing valve 1 according to figure 21 a first channel 110 is etched into a front side 113 of a thin substrate 3 having a thickness 116. The first channel 110 is connected to a second channel 111 on the backside 114 of the thin substrate 3, made for instance of a very thin, etchable steel foil, a polyimide-foil or the like. The first channel 110 and the second channel 111 are connected to one another by an opening 115. The depth of the first channel 110 is identified by reference numeral 117. The second channel 111, etched on the respective backside 114 of the very thin substrate 3 has a similar depth. Both the depth 117 of the first channel 110 and the depth of the second channel 111 exceed the thickness 116 of the substrate 3, thus allowing for a transfer of liquid via opening 115 from the front side 113 of the very thin substrate 3 to the respective backside 114 thereof.

The microfluidic devices according to the present invention may be used for processing human blood, liquor or other body fluid samples, aqueous solutions of reagents, liquids containing organic solutions or oil. Said microfluidic devices according to the present invention can be used for the extension of incubation time or reaction time, to allow for enhancing the residence time of liquid 19 to dissolve with dried reagents, which are for example contained within the functional chamber 40.

### Reference Numeral List

- 1: non-closing valve (geometric valve)
- 2: channel
- 3: substrate
- 4: constant width
- 5: first width
- 6: second width
- 7: gap
- 8: first surface
- 9: second surface
- 10: inlet channel
- 11: width of inlet channel
- 12: trigger channel
- 13: width of trigger channel
- 14: outlet channel
- 15: width of outlet channel
- 16: branch-off location
- 17: joining location
- 18: funnel-shaped area
- 19: liquid
- 20: 1^{st} meniscus
- 21: 2^{nd} (common) meniscus
- 22: slow flow of liquid 19
- 23: main flow of liquid 19
- 24: outlet flow

- 26: edge

- 30: recess
- 31: arc

- 40: functional chamber
- 41: parallel chamber
- 42: plurality of parallel channels with non closing valves

- 43: 1^{st} circumventing trigger channel
- 44: 2^{nd} circumventing trigger channel
- 45: 2^{nd} branch-off location

- 60: flow-splitter device
- 61: trigger point
- 62: inlet channel
- 63: splitted channel
- 64: array of splitted channels
- 65: geometric valve

- 71: foil
- 72: overlapping region
- 73: geometric valve

- 80: first fluidic trigger structure
- 81: liquid supply
- 82: reservoir
- 83: flow direction of the liquid
- 84: cascade arrangement

- 90: second liquidic trigger structure
- 91: liquid supply
- 92: reservoir
- 93: flow direction
- 94: cascade-arrangement

- 100: third liquidic trigger structure
- 101: liquid supply
- 102: reservoir
- 103: flow direction
- 104: cascade arrangement
- 110: first channel
- 111: second channel
- 112: channel surface
- 113: front side
- 114: backside
- 115: opening
- 116: thickness d of substrate
- 117: channel depth

## Claims

1. Microfluidic device through which a liquid (19) is conveyed, having at least one non-closing valve (1, 65, 73) and a channel system (10, 12, 14; 43, 44; 63, 64) within which a channel (12) branches-off from a first channel (10) connected to a liquid supply (81, 91, 101), **characterized in that** the channel (12) branches-off from the first channel (10) prior to the at least one non-closing valve (1, 65, 73) and is connected to the outlet of the non-closing valve (1, 65, 73) channel (14) downstream of the non-closing valve (1, 65, 73).

2. Microfluidic device according to claim 1, wherein the channel (12) is a trigger channel to control the flow of liquids (19) in the first channel (10).

3. Microfluidic device according to claim 1, wherein the channel (12, 43, 44) has a width or a diameter (11) substantially lower as compared to the first channel (10).

4. Microfluidic device according to claim 1, wherein the channel (12, 43, 44) has a length exceeding the length of a flow pass to of the liquid (19) to the non-closing valve (1, 65, 73), causing a time delay of the flow of the liquid (20) in the channel (12, 43, 44) before reaching the non-closing valve (1, 65, 73).

5. Microfluidic device according to claim 1, wherein the non-closing valve (1, 65, 73) is a geometric valve.

6. Microfluidic device according to claim 1, wherein the first channel (10) and an outlet channel (14) are connected by a non-closing valve (1), the channel (12) branching-off upstream of the non-closing valve (1) and joining the outlet channel (14) at the outlet of the non-closing valve (1, 65, 73).

7. Microfluidic device according to claim 1, wherein a functional chamber (40) is provided for dissolving of dried reagents with the liquid (19).

8. Microfluidic device according to claim 7, wherein the channel (12, 43, 44) branches-off prior to the functional chamber (40).

9. Microfluidic device according to claim 7, wherein the channel (12) branches-off from an outlet (42), shaped as a plurality (42) of channels having non closing valves (1, 65, 73) at the end portion of the functional chamber (40).

10. Microfluidic device according to claim 1, wherein an inlet channel (62) is split into an array (64) of splitted channels (63), to one of which a channel (12) for triggering liquid flow is assigned, the openings of the array of splitted channels (63) forming a geometric valve (65).

11. Microfluidic device according to claim 1, wherein an inlet channel (62) is split into an array (64) of splitted channels (63) arranged on both sides of a planar structure (71).

12. Microfluidic device according to claim 11, wherein at the locations, where the splitted channels (63) on both sides of the planar support (71) overlap, geometric valves (73) are formed.

13. Microfluidic device according to one or more of claims 1 to 12, wherein at least one liquid supply (81, 91, 101), a flow-splitter device (60, 70) to which at least one trigger channel (12, 43, 44) is assigned and a liquid reservoir (82, 92, 102) are arranged on a common support (3).

14. Microfluidic device according to claim 13, wherein the splitter device (60, 70) for the liquid (19) to be conveyed comprises a cascade-arrangement (84, 94, 104).

15. Microfluidic device according to one or more of claim 1 to 14, wherein at least one liquid supply (81, 92, 101) and at least one functional chamber (40) having a pillar-array (42), to which at least one trigger channel (12) is assigned, are arranged on a common support (3).
